# EUROPEAN PATENT SPECIFICATION

(11) **EP 3 866 421 B1**
(45) Date of publication and mention of the grant of the patent: **21.02.2024**
(21) Application number: 19934381.5
(22) Date of filing: 27.12.2019
(51) Int. Cl.: H04L 61/103

(54) **PROFINET PROTOCOL-BASED ACCESS METHOD IN INDUSTRIAL SDN**
AUF PROFINET-PROTOKOLL BASIERTES ZUGRIFFSVERFAHREN IN INDUSTRIELLEM SDN
PROCÉDÉ D'ACCÈS BASÉ SUR LE PROTOCOLE PROFINET DANS UN RÉSEAU SDN INDUSTRIEL

(30) Priority: 16.12.2019 CN 201911290600
(43) Date of publication of application: 18.08.2021
(73) Proprietor: Shenyang Institute of Automation, Chinese Academy of Sciences, Shenyang, Liaoning 110016 (CN)
(72) Inventor: YU, Haibin, Shenyang Liaoning 110016 (CN); ZENG, Peng, Shenyang Liaoning 110016 (CN); LI, Dong, Shenyang Liaoning 110016 (CN); YANG, Ming, Shenyang Liaoning 110016 (CN); YU, Xueting, Shenyang Liaoning 110016 (CN); LI, Zhibo, Shenyang Liaoning 110016 (CN); LIU, Jindi, Shenyang Liaoning 110016 (CN)
(74) Representative: Mewburn Ellis LLP
(86) International application number: PCT/CN2019/128991
(87) International publication number: WO 2021/120285

(56) References cited:
- EP-A1- 3 206 356
- WO-A1-2019/147311
- CN-A- 105 634 986
- CN-A- 106 411 820
- CN-A- 109 067 644
- CN-A- 109 995 675
- CN-A- 110 460 483
- US-A1- 2015 071 289

## Description

### Technical Field

The present invention belongs to the field of industrial software defined networks, relates to design and invention of an access method of an industrial Ethernet protocol in an industrial software defined network, and particularly relates to an access method based on a PROFINET industrial Ethernet protocol in an industrial software defined network.

### Background

An industrial software defined network is a flat software defined network composed of an industrial software defined network controller and an industrial software defined network switch. The industrial software defined network controller interacts with an industrial software defined network service platform through a northbound interface, provides a service interface for the platform, and can encapsulate the information, state and function realization of the entire network into the form of a service library which can be invoked by the service platform. The network controller interacts with the switch through a southbound interface, receives data messages and network state information reported by the switch, and also dynamically issues network configuration information to the switch through the southbound interface. The industrial software defined network switch is an actual forwarding device of network data messages, but its forwarding rule, i.e., communication logic, is managed and controlled by the network controller. Logical communication rules in the network are reflected in the form of a flow table in the switch. The flow table can be mainly understood as two parts: one part is matching item and the other part is matching action.

Networking access of commercial Ethernet IP devices is relatively simple. As long as IPv4 and IPv6 dual stacks are provided, the commercial Ethernet devices can be accessed and networked through an ordinary SDN switch.

When a PROFINET industrial Ethernet device is connected to a flat new network which deeply integrates IT and OT, the processes of industrial Ethernet protocol identification, analysis, processing and issuance and establishment of device access communication logic shall be completed in a software defined mode in combination with the industrial software defined network service platform in a way of issuing network configuration information through a southbound interface library protocol.

CN 109 067 644 A describes a method for realizing a PROFINET industrial Ethernet gateway comprising the steps: a master station respectively sends a slave station name inquiry request to each slave station through a DCP search protocol; the master station sends the slave station name inquiry request to each slave station and receiving a master station name returned by each slave station. The address resolution of each slave station is performed by ARP protocol, and the address resolution results of each slave station are obtained

### Summary

In the process of construction of an industrial software defined network architecture, when a PROFINET industrial Ethernet device is connected to a flat new network which deeply integrates IT and OT, the processes of PROFINET industrial Ethernet protocol identification, analysis, processing and issuance and establishment of device access communication logic shall be completed in a software defined mode in combination with an industrial software defined network service platform in a way of issuing network configuration information through a southbound interface library protocol.

To achieve the above purpose, the present invention provides methods according to the independent claims that adopt the following technical solutions:
An access method of a PROFINET protocol in an industrial SDN comprises a message processing flow of the PROFINET industrial Ethernet protocol in an industrial software defined network switch, comprising the following steps:
(1) when the industrial software defined network switch receives a PROFINET-DCP broadcast message periodically transmitted by a PROFINET master station device, flow table matching is conducted, and the PROFINET-DCP broadcast message is forwarded according to a forwarding action specified in a flow table;
(2) when the industrial software defined network switch receives a PROFINET-DCP response message of the PROFINET-DCP broadcast message transmitted by a terminal device for the PROFINET master station device, flow table matching is conducted, and the PROFINET-DCP response message is forwarded according to the forwarding action specified in the flow table;
(3) according to the PROFINET-DCP message between the PROFINET master station device and the terminal device, an industrial software defined network controller establishes a logical communication link in the industrial software defined network in a way of issuing the flow table to complete the device networking access.

A networking process of an industrial Ethernet protocol master station and the terminal device is as follows:
(1) the master station sends an MAC layer broadcast message to a network port;
(2) after receiving the broadcast message sent by the master station, the terminal device replies with own status information;
(3) the master station device receives the reply from the terminal device and sets the configuration information through an MAC layer unicast message;
(4) after receiving the MAC layer unicast message, the terminal device replies to the master station device and configures a success message;
(5) after receiving the success message sent by the terminal device, the master station device initiates ARP network layer addressing and conducts address resolution;
(6) the terminal device replies with the APR network layer addressing and notifies an MAC address corresponding to an involved IP address;
(7) the master station device initiates data communication to the terminal device;
(8) the master station device and the terminal device conduct communication and data transmission.

The destination address of the MAC layer broadcast message is the MAC address in a fixed format, and the broadcast message is used for discovering the terminal device which is connected to a network.

The access method of the PROFINET protocol in the industrial SDN also comprises a message processing flow of the PROFINET industrial Ethernet protocol in an industrial software defined network controller, comprising the following steps:
(1) the controller receives a first match, i.e., PROFINET industrial Ethernet protocol message, transmitted by the master station device and judges whether the message is a broadcast message;
(2) when the controller receives a message type of the broadcast message, the controller broadcasts the message to all switch ports which are currently in state of UP;
(3) the controller receives device online information replied by a slave station device through switches; the controller generates corresponding MAC layer communication logic configuration information according to the device online information, and issues the information to the switches on a communication path through a southbound interface;
(4) the controller receives the PROFINET industrial Ethernet protocol message transmitted by the master station, generates the corresponding network layer communication logic configuration information according to IP address information in the message, and sends the information to network switches on the communication path through the southbound interface.

The PROFINET industrial Ethernet protocol message is an ARP addressing message.

The device online information comprises: a message source port, a source MAC address and destination MAC address information
The logical configuration information comprises: a source IP address is the master station or slave station device, and a destination IP address is the slave station or master station device.

The IP address information comprises a source port, a source IP address and destination IP address information.

A switch processing flow for networking of the industrial Ethernet protocol master station and slave station devices is as follows:
(1) after receiving a configuration success message, the master station device initiates ARP network layer addressing and address resolution for all slave station devices within a configuration range; the ARP addressing message in the switches is uploaded to the controller; and the controller broadcasts the ARP addressing message;
(2) the slave station devices reply the ARP addressing message to the controller, and the controller configures corresponding network layer logic communication flow tables from the master station device to the slave station devices and from the slave station devices to the master station device in all the switches on the communication path;
(3) the master station initiates TCP/IP-based data communication to the slave station devices according to the content of a configuration program;
(4) the master station and slave station devices conduct communication through a relationship which is set by the configuration program.

The content of the logical communication flow table configuration match comprises: the source IP address is the IP address of the master station and the slave station devices; the destination IP address is the IP address of the master station and slave station devices; and a matching action is unicast port forwarding.

The present invention has the following beneficial effects and advantages:
1. The present invention clearly proposes a network access process and method for the PROFINET industrial Ethernet protocol device in an industrial software defined network environment. The method is suitable for networking of all kinds of industrial devices which support PROFINET protocol in the industrial software defined network environment, and completes the communication process, so as to satisfy the communication needs of various upper industrial services and industrial configuration.
2. The present invention provides the specific processing flows of the message type in the industrial software defined network switches and controller in the access process of the PROFINET industrial Ethernet protocol in the industrial software defined network, and indicates the specific matching mode of flow table matching items in the SDN, so as to satisfy plug and play of PROFINET device in actual application scenarios.
3. The present invention realizes the access and networking of the PROFINET industrial Ethernet protocol device in the industrial software defined network environment, which means that the unified management function of PROFINET networking is realized on the premise of an SDN-based environment. The use efficiency and effect of the PROFINET industrial Ethernet protocol networking are further improved through the topology discovery function, device management function and flow monitoring function of the industrial SDN controller.

### Description of Drawings

Fig. 1 is an application scenario diagram of a multi-industrial Ethernet protocol adaptation technology of an industrial software defined network;
Fig. 2 is a networking flow chart of an industrial Ethernet protocol master station and a terminal device; and
Fig. 3 is a networking flow chart of industrial Ethernet protocol master station and slave station devices.

### Detailed Description

1. A message processing flow of a PROFINET industrial Ethernet protocol in an industrial software defined network switch comprises the following steps:
   1) when the industrial software defined network switch receives a PROFINET-DCP broadcast message periodically transmitted by a PROFINET master station device, flow table matching is conducted, and the PROFINET-DCP broadcast message is forwarded according to a forwarding action specified in a flow table;
   2) when the industrial software defined network switch receives a PROFINET-DCP response message of the PROFINET-DCP broadcast message transmitted by PROFINET-IO device for the PROFINET master station device, flow table matching is conducted, and the PROFINET-DCP response message is forwarded according to the forwarding action specified in the flow table;
   3) according to the PROFINET-DCP message between the PROFINET master station device and the PROFINET-IO device, an industrial software defined network controller establishes a logical communication link for PROFINET industrial Ethernet protocol device networking in the industrial software defined network in a way of issuing the flow table to complete the device networking access.
2. A message processing flow of the PROFINET industrial Ethernet protocol in an industrial software defined network controller comprises the following steps:

(1) the controller receives a first match, i.e., an industrial Ethernet protocol message, and judges effectiveness and validity of the message as well as whether the message is a broadcast message;
(2) the controller broadcasts the message to all UP ports of the current switch through FLOOD or MUTICAST;
(3) the controller receives device online information replied by a slave station device; the controller generates corresponding MAC layer communication logic configuration information according to a message source port, a source MAC address and a destination MAC address, and issues the configuration information to the corresponding network switches through a southbound interface;
(4) the controller receives the ARP addressing message, generates the corresponding network layer communication logic configuration information according to source port, the source IP address and the destination IP address, and sends the information to the corresponding network switches through the southbound interface.

The present invention will be further described in detail below in combination with the drawings and the embodiments.

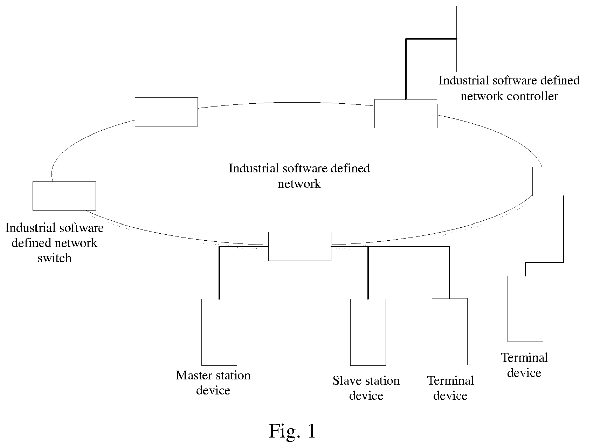

Fig. 1 shows a basic architecture of an access deployment scenario of a PROFINET industrial Ethernet protocol in an industrial software defined network. On the basis of realizing deep integration of IT and OT by the industrial software defined network, the access deployment architecture realizes networking access of the PROFINET industrial Ethernet protocol device. An industrial software defined network is a flat software defined network composed of an industrial software defined network controller and an industrial software defined network switch. The industrial software defined network controller interacts with an industrial software defined network service platform through a northbound interface, provides a service interface for the platform, and can encapsulate the information, state and function realization of the entire network into the form of a service library which can be invoked by the service platform. The network controller interacts with the switch through a southbound interface, receives data messages and network state information reported by the switch, and also dynamically issues network configuration information to the switch through the southbound interface. The industrial software defined network switch is an actual forwarding device of network data messages, but its forwarding rule, i.e., communication logic, is managed and controlled by the network controller. Logical communication rules in the network are reflected in the form of a flow table in the switch. The flow table can be mainly understood as two parts: one part is matching item and the other part is matching action. The industrial Ethernet networking device shown in the above drawing is composed of a master station device, a slave station device and a plurality of terminal devices. The network configuration of the master station device and the slave station device is completed by configuration software or hardware management configuration software, and the logical networking of the group of industrial Ethernet device is also completed through configuration software or corresponding industrial Ethernet protocol management configuration software. Generally, the industrial Ethernet networking process comprises the following communication types: MAC layer broadcast discovered by the master station from the network slave station and the terminal devices; MAC layer unicast communication between the master station and the slave station and between the master station and the terminal devices; network layer communication between the master station and the slave station, the master station and the terminal devices, and the slave station and the terminal devices.

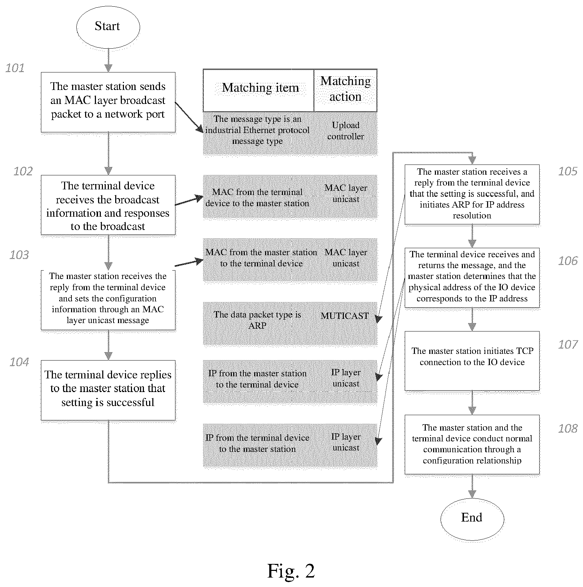

Fig. 2 shows the networking of the industrial Ethernet protocol master station and the terminal devices and the corresponding configuration process of the flow table in the industrial software defined network switches during networking. The industrial Ethernet protocol master station and the terminal devices will complete networking access through the above process, can conduct normal communication and data transmission, and can realize the networking access process of the industrial Ethernet protocol master station and the terminal devices in the industrial software defined network environment. The process starts with step 101. The master station sends an MAC layer broadcast packet to a network port, and the destination address is an MAC address in a fixed format. The function of the broadcast packet is to discover the terminal devices which are connected to the network. In the flow table of the switch, the flow table for the industrial Ethernet protocol message type is preset. The contents of the flow table are matched according to the protocol message type ether_TYPE. The broadcast message is reported to the industrial software defined network controller. After the controller completes the relevant processing, the message is multicast to all ports with the current state of UP, not including the source port of the broadcast message, i.e., the port of the network switch connected with the master station. After completing forwarding, step 102 is conducted. If the terminal device under the industrial Ethernet networking system is connected to the network, the terminal device replies with the own state information in the form of unicast after receiving the broadcast message sent by the master station. The unicast message is matched with the current ether_TYPE and uploaded to the controller. The controller configures the flow table for the relevant industrial software defined network switch, and establishes the communication link between the terminal and the master station based on the MAC layer. The matched contents are: the source MAC address is the terminal device; the destination MAC address is the master station; and the matching action is directly forwarded from the involved switch port on the communication path. In step 103, the master station receives the online state reply of the terminal device, and then sets the relevant configuration information through the MAC layer unicast message, such as IP address and control information. In this process, the configuration of the MAC layer logical communication link from the master station to the terminal device issued by the controller is completed. The matching contents are: the source MAC address is the master station, and the destination MAC address is the terminal device. At this moment, the configuration of the MAC layer logical communication between the industrial Ethernet protocol master station and the terminal device under the industrial software defined network environment is completed. In step 104, after receiving the configuration message of the relevant configuration information of the master station, the terminal device replies to the master station with a configuration success message. The message is matched by the MAC layer unicast flow table from the terminal device to the master station, and directly forwarded to the master station. In step 105, after receiving the configuration success information, the master station initiates ARP network layer addressing to all the terminal devices within the configuration range to conduct an address resolution process. The preset flow table in the switch comprises: a message with the message type of ARP is uploaded to the controller, and the controller broadcasts the ARP message. In step 106, the terminal device replies the ARP message to notify the MAC address corresponding to the involved IP address. The replied ARP message is also matched and uploaded to controller. The controller configures the corresponding network layer logical communication from the master station to the terminal device and from the terminal device to the master station in the relevant switch according to the contents of the replied ARP message. At this moment, the network layer logical communication flow table between the industrial Ethernet protocol master station device and the terminal device is configured in the industrial software defined network environment. The matched contents of the flow table are: the source IP address is the master station (terminal) device; the destination IP address is the terminal (master station) device; and the matching action is the direct forwarding from the involved switch port on the communication path. In step 107 below, the master station initiates TCP/IP-based data communication to the terminal devices according to the contents of a configuration program. In step 108, the entire process of networking access between the industrial Ethernet master station device and the terminal devices in the industrial software defined network environment is completed. The master station and the terminal devices conduct normal communication and data transmission through a relationship which is set by the configuration program.

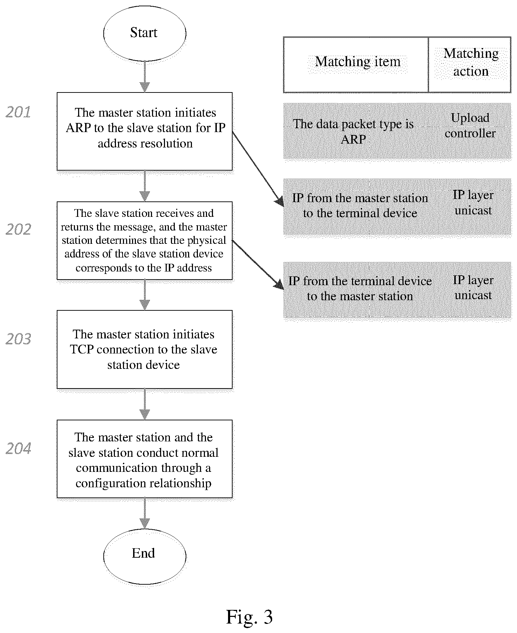

Fig. 3 shows the networking of the industrial Ethernet protocol master station and slave station devices and the corresponding configuration process of the flow table in the industrial software defined network switches during networking. The industrial Ethernet protocol master station and slave station devices will complete networking access through the above process, can conduct normal communication and data transmission, and can realize the networking access process of the PROFIENT industrial Ethernet protocol master station and slave station devices in the industrial software defined network environment. The process starts with step 201. After receiving the configuration success information, the master station initiates ARP network layer addressing to all the slave station devices within the configuration range to conduct an address resolution process. The preset flow table in the switch comprises: a message with the message type of ARP is uploaded to the controller, and the controller broadcasts the ARP message. In step 202, the slave station device replies the ARP message to notify the MAC address corresponding to the involved IP address. The replied ARP message is also matched and uploaded to controller. The controller configures the corresponding network layer logical communication from the master station to the slave station device and from the slave station device to the master station in the relevant switch according to the contents of the replied ARP message. At this moment, the network layer logical communication between the industrial Ethernet protocol master station device and the slave station device is configured in the industrial software defined network environment. In step 203 below, the master station initiates TCP/IP-based data communication to the slave station device according to the contents of a configuration program. In step 204, the entire process of networking access between the PROFIENT industrial Ethernet master station device and the slave station device in the industrial software defined network environment is completed. The master station and slave station devices conduct normal communication and data transmission through a relationship which is set by the configuration program.

## Claims

1. An access method of a PROFINET protocol in an industrial SDN, comprising a message processing flow of the PROFINET industrial Ethernet protocol in an industrial software defined network switch, comprising the following steps:
(1) when the industrial software defined network switch receives a PROFINET-DCP broadcast message periodically transmitted by a PROFINET master station device, flow table matching is conducted, and the PROFINET-DCP broadcast message is forwarded according to a forwarding action specified in a flow table;
(2) when the industrial software defined network switch receives a PROFINET-DCP response message of the PROFINET-DCP broadcast message transmitted by a terminal device for the PROFINET master station device, flow table matching is conducted, and the PROFINET-DCP response message is forwarded according to the forwarding action specified in the flow table;
(3) according to the PROFINET-DCP message between the PROFINET master station device and the terminal device, an industrial software defined network controller establishes a logical communication link in the industrial software defined network in a way of issuing the flow table to complete the device networking access,
**characterized in that** a networking process of an industrial Ethernet protocol master station and the terminal device is as follows:
(1) the master station sends an MAC layer broadcast message to a network port;
(2) after receiving the broadcast message sent by the master station, the terminal device replies with own status information;
(3) the master station device receives the reply from the terminal device and sets the configuration information through an MAC layer unicast message;
(4) after receiving the MAC layer unicast message, the terminal device replies to the master station device and configures a success message;
(5) after receiving the success message sent by the terminal device, the master station device initiates ARP network layer addressing and conducts address resolution;
(6) the terminal device replies with the APR network layer addressing and notifies an MAC address corresponding to an involved IP address;
(7) the master station device initiates data communication to the terminal device;
(8) the master station device and the terminal device conduct communication and data transmission.

2. The access method of the PROFINET protocol in the industrial SDN according to claim 1, **characterized in that** the destination address of the MAC layer broadcast message is the MAC address in a fixed format, and the broadcast message is used for discovering the terminal device which is connected to a network.

3. An access method of a PROFINET protocol in an industrial SDN, **characterized by** comprising a message processing flow of the PROFINET industrial Ethernet protocol in an industrial software defined network controller, **characterized by** the following steps:
(1) the controller receives a first match, i.e., PROFINET industrial Ethernet protocol message, transmitted by the master station device and judges whether the message is a broadcast message;
(2) when the controller receives a message type of the broadcast message, the controller broadcasts the message to all switch ports which are currently in state of UP;
(3) the controller receives device online information replied by a slave station device through switches; the controller generates corresponding MAC layer communication logic configuration information according to the device online information, and issues the information to the switches on a communication path through a southbound interface;
(4) the controller receives the PROFINET industrial Ethernet protocol message transmitted by the master station, generates the corresponding network layer communication logic configuration information according to IP address information in the message, and sends the information to network switches on the communication path through the southbound interface.

4. The access method of the PROFINET protocol in the industrial SDN according to claim 3, **characterized in that** the PROFINET industrial Ethernet protocol message is an ARP addressing message.

5. The access method of the PROFINET protocol in the industrial SDN according to claim 3, **characterized in that** the device online information comprises: a message source port, a source MAC address and destination MAC address information.

6. The access method of the PROFINET protocol in the industrial SDN according to claim 3, **characterized in that** the logical configuration information comprises: a source IP address is the master station or slave station device, and a destination IP address is the slave station or master station device.

7. The access method of the PROFINET protocol in the industrial SDN according to claim 3, **characterized in that** the IP address information comprises a source port, a source IP address and destination IP address information.

8. The access method of the PROFINET protocol in the industrial SDN according to claim 3, **characterized in that** a switch processing flow for networking of the industrial Ethernet protocol master station and slave station devices is as follows:
(1) after receiving a configuration success message, the master station device initiates ARP network layer addressing and address resolution for all slave station devices within a configuration range; the ARP addressing message in the switches is uploaded to the controller; and the controller broadcasts the ARP addressing message;
(2) the slave station devices reply the ARP addressing message to the controller, and the controller configures corresponding network layer logic communication flow tables from the master station device to the slave station devices and from the slave station devices to the master station device in all the switches on the communication path;
(3) the master station initiates TCP/IP-based data communication to the slave station devices according to the content of a configuration program;
(4) the master station and slave station devices conduct communication through a relationship which is set by the configuration program.

9. The access method of the PROFINET protocol in the industrial SDN according to claim 3, **characterized in that** the content of the logical communication flow table configuration match comprises: the source IP address is the IP address of the master station and the slave station devices; the destination IP address is the IP address of the master station and slave station devices; and a matching action is unicast port forwarding.

## Patentansprüche

1. Zugriffsverfahren eines PROFINET-Protokolls in einem Industrie-SDN, umfassend einen Nachrichtenverarbeitungsablauf des Industrial-Ethernet-PROFINET-Protokolls in einem von Industriesoftware definierten Netzwerk-Switch, folgende Schritte umfassend:
(1) wenn der von Industriesoftware definierte Netzwerk-Switch eine PROFINET-DCP-Broadcast-Nachricht empfängt, die periodisch von einer PROFINET-Masterstationsvorrichtung gesendet wird, wird ein Ablauf-Tabellen-Abgleich durchgeführt und die PROFINET-DCP-Broadcast-Nachricht gemäß einer in einer Ablauf-Tabelle spezifizierten Weiterleitungsaktion weitergeleitet;
(2) wenn der von Industriesoftware definierte Netzwerk-Switch eine PROFINET-DCP-Antwortnachricht der von einer Endgerätvorrichtung gesendeten PROFINET-DCP-Broadcast-Nachricht für die PROFINET-Masterstationsvorrichtung empfängt, wird ein Ablauf-Tabellen-Abgleich durchgeführt und die PROFINET-DCP-Antwortnachricht gemäß der in der Ablauf-Tabelle spezifizierten Weiterleitungsaktion weitergeleitet;
(3) gemäß der PROFINET-DCP-Nachricht zwischen der PROFINET-Masterstationsvorrichtung und der Endgerätvorrichtung stellt ein von Industriesoftware definierter Netzwerk-Controller eine Logikkommunikationsverbindung in dem von Industriesoftware definierten Netzwerk her, sodass die Ablauf-Tabelle ausgegeben wird, um den Netzwerkzugriff der Vorrichtung zu vervollständigen,
**dadurch gekennzeichnet, dass** ein Netzwerkprozess einer Industrial-Ethernet-Protokoll-Masterstation und der Endgerätvorrichtung Folgendes umfasst:
(1) die Masterstation sendet eine MAC-Schicht-Broadcast-Nachricht an einen Netzwerkanschluss;
(2) nach dem Empfangen der von der Masterstation gesendeten Broadcast-Nachricht antwortet die Endgerätvorrichtung mit eigenen Statusinformationen;
(3) die Masterstationsvorrichtung empfängt die Antwort von der Endgerätvorrichtung und stellt die Konfigurationsinformationen über eine MAC-Schicht-Unicast-Nachricht ein;
(4) nach dem Empfangen der MAC-Schicht-Unicast-Nachricht antwortet die Endgerätvorrichtung der Masterstationsvorrichtung und konfiguriert eine Erfolgsnachricht;
(5) nach dem Empfangen der von der Endgerätvorrichtung gesendeten Erfolgsnachricht initiiert die Masterstationsvorrichtung ARP-Netzwerk-Schicht-Adressierung und führt eine Adressenermittlung durch;
(6) die Endgerätvorrichtung antwortet mit ARP-Netzwerk-Schicht-Adressierung und teilt eine MAC-Adresse mit, die einer beteiligten IP-Adresse entspricht;
(7) die Masterstationsvorrichtung initiiert Datenkommunikation mit der Endgerätvorrichtung;
(8) die Masterstationsvorrichtung und die Endgerätvorrichtung führen Kommunikation und Datenübertragung durch.

2. Zugriffsverfahren eines PROFINET-Protokolls in einem Industrie-SDN nach Anspruch 1, **dadurch gekennzeichnet, dass** die Zieladresse der MAC-Schicht-Broadcast-Nachricht die MAC-Adresse in einem Festformat ist und die Broadcast-Nachricht zum Auffinden der Endgerätvorrichtung, die mit einem Netzwerk verbunden ist, verwendet wird.

3. Zugriffsverfahren eines PROFINET-Protokolls in einem Industrie-SDN, **dadurch gekennzeichnet, dass** es einen Nachrichten-Verarbeitungsablauf des Industrie-Ethernet-PROFINET-Protokolls in einem von Industriesoftware definierten Netzwerk-Controller umfasst, **gekennzeichnet durch** die folgenden Schritte:
(1) der Controller empfängt eine erste Übereinstimmung, d h. eine Industrial-Ethernet-PROFINET-Protokoll-Nachricht, gesendet von der Masterstationsvorrichtung, und entscheidet, ob es sich bei der Nachricht um eine Broadcast-Nachricht handelt;
(2) wenn der Controller einen Nachrichtentyp der Broadcast-Nachricht empfängt, überträgt der Controller die Nachricht per Broadcast an alle Switch-Anschlüsse, die sich gerade in einem UP-Zustand befinden;
(3) der Controller empfängt Vorrichtungs-Onlineinformationen, die über Switches als Antwort von einer Slave-Stationsvorrichtung gesendet werden; der Controller erzeugt entsprechende MAC-Schicht-Kommunikationslogik-Konfigurationsinformationen gemäß den Vorrichtungs-Onlineinformationen und gibt die Informationen über eine Southbound-Schnittstelle an die Switches auf einem Kommunikationspfad aus;
(4) der Controller empfängt die von der Masterstation gesendete Industrial-Ethernet-PROFINET-Protokoll-Nachricht, erzeugt die entsprechenden Netzwerk-Schicht-Kommunikationslogik-Konfigurationsinformationen gemäß den IP-Adressinformationen in der Nachricht und sendet die Informationen über die Southbound-Schnittstelle an Netzwerk-Switches auf einem Kommunikationspfad.

4. Zugriffsverfahren eines PROFINET-Protokolls in einem Industrie-SDN nach Anspruch 3, **dadurch gekennzeichnet, dass** es sich bei der Industrial-Ethernet-PROFINET-Protokoll-Nachricht um eine ARP-Adressierungsnachricht handelt.

5. Zugriffsverfahren eines PROFINET-Protokolls in einem Industrie-SDN nach Anspruch 3, **dadurch gekennzeichnet, dass** die Vorrichtungs-Onlineinformationen Folgendes umfassen: einen Nachrichten-Quell-Anschluss, eine Quell-MAC-Adresse und Ziel-MAC-Adresseninformationen.

6. Zugriffsverfahren eines PROFINET-Protokolls in einem Industrie-SDN nach Anspruch 3, **dadurch gekennzeichnet, dass** die Logikkonfigurationsinformationen Folgendes umfassen: eine Quell-IP-Adresse ist die Masterstations- oder Slave-Stationsvorrichtung und eine Ziel-IP-Adresse ist die Slave-Stations- oder Masterstationsvorrichtung.

7. Zugriffsverfahren eines PROFINET-Protokolls in einem Industrie-SDN nach Anspruch 3, **dadurch gekennzeichnet, dass** die IP-Adresseninformationen einen Quell-Anschluss, eine Quell-IP-Adresse und Ziel-IP-Adresseninformationen umfassen.

8. Zugriffsverfahren eines PROFINET-Protokolls in einem Industrie-SDN nach Anspruch 3, **dadurch gekennzeichnet, dass** ein Switch-Verarbeitungsablauf für den Netzwerkbetrieb der Industrial-Ethernet-Protokoll-Masterstations- und Slave-Stationsvorrichtungen Folgendes umfasst:
(1) nach dem Empfangen einer Konfigurations-Erfolgsnachricht initiiert die Masterstationsvorrichtung ARP-Netzwerk-Schicht-Adressierung und Adressenermittlung für alle Slave-Stationsvorrichtungen innerhalb eines Konfigurationsbereichs; die ARP-Adressierungsnachricht in den Switches wird für den Controller hochgeladen; und der Controller überträgt die ARP-Adressierungsnachricht per Broadcast;
(2) die Slave-Stationsvorrichtungen antworten dem Controller mit der ARP-Adressierungsnachricht und der Controller konfiguriert entsprechende Netzwerk-Schicht-Logikkommunikations-Ablauf-Tabellen von der Masterstationsvorrichtung für die Slave-Stationsvorrichtungen und von den Slave-Stationsvorrichtungen für die Masterstationsvorrichtung in allen Switches auf dem Kommunikationspfad;
(3) die Masterstation initiiert TCP/IP-basierte Datenkommunikation mit den Slave-Stationsvorrichtungen gemäß dem Inhalt eines Konfigurationsprogramms;
(4) die Masterstation und die Slave-Stationsvorrichtungen führen Kommunikation über eine Beziehung durch, die durch das Konfigurationsprogramm eingestellt ist.

9. Zugriffsverfahren eines PROFINET-Protokolls in einem Industrie-SDN nach Anspruch 3, **dadurch gekennzeichnet, dass** der Inhalt der Logikkommunikations-Ablauf-Tabellen-Konfigurationsübereinstimmung Folgendes umfasst: die Quell-IP-Adresse ist die IP-Adresse der Masterstation und der Slave-Stationsvorrichtungen; die Ziel-IP-Adresse ist die IP-Adresse der Masterstation und der Slave-Stationsvorrichtungen; und eine Abgleich-Aktion ist eine Unicast-Anschluss-Weiterleitung.

## Revendications

1. Procédé d'accès d'un protocole PROFINET dans un SDN industriel, comprenant un flux de traitement de message du protocole Ethernet industriel PROFINET dans un commutateur de réseau défini par un logiciel industriel, comprenant les étapes suivantes consistant à :
(1) lorsque le commutateur de réseau défini par un logiciel industriel reçoit un message de diffusion PROFINET-DCP transmis périodiquement par un dispositif de station maître PROFINET, une mise en correspondance de table de flux est effectuée, et le message de diffusion PROFINET-DCP est transféré selon une action de transfert spécifiée dans une table de flux ;
(2) lorsque le commutateur de réseau défini par un logiciel industriel reçoit un message de réponse PROFINET-DCP du message de diffusion PROFINET-DCP transmis par un dispositif terminal pour le dispositif de station maître PROFINET, une mise en correspondance de table de flux est effectuée et le message de réponse PROFINET-DCP est transféré selon l'action de transfert spécifiée dans la table de flux ;
(3) selon le message PROFINET-DCP entre le dispositif de station maître PROFINET et le dispositif terminal, un dispositif de commande de réseau défini par un logiciel industriel établit une liaison de communication logique dans le réseau défini par un logiciel industriel de manière à délivrer la table de flux pour compléter de mise en réseau de dispositif,
**caractérisé en ce qu'**un processus de mise en réseau d'une station maître de protocole Ethernet industriel et du dispositif terminal est le suivant :
(1) la station maître envoie un message de diffusion de couche MAC à un port de réseau ;
(2) après avoir reçu le message de diffusion envoyé par la station maître, le dispositif terminal répond avec ses propres informations d'état ;
(3) le dispositif de station maître reçoit la réponse en provenance du dispositif terminal et définit les informations de configuration par le biais d'un message de diffusion individuelle de couche MAC ;
(4) après avoir reçu le message de diffusion individuelle de couche MAC, le dispositif terminal répond au dispositif de station maître et configure un message de réussite ;
(5) après avoir reçu le message de réussite envoyé par le dispositif terminal, le dispositif de station maître initie un adressage de la couche réseau ARP et effectue une résolution d'adresse ;
(6) le dispositif terminal répond avec l'adressage de couche de réseau APR et notifie une adresse MAC correspondant à une adresse IP impliquée ;
(7) le dispositif de station maître initie une communication de données au dispositif terminal ;
(8) le dispositif de station maître et le dispositif terminal effectuent une communication et une transmission de données.

2. Procédé d'accès du protocole PROFINET dans le SDN industriel selon la revendication 1, **caractérisé en ce que** l'adresse de destination du message de diffusion de couche MAC est l'adresse MAC dans un format fixe, et le message de diffusion est utilisé pour découvrir le dispositif terminal qui est connecté à un réseau.

3. Procédé d'accès d'un protocole PROFINET dans un SDN industriel, **caractérisé en ce qu'**il comprend un flux de traitement de message du protocole Ethernet industriel PROFINET dans un dispositif de commande de réseau défini par un logiciel industriel, **caractérisé par** les étapes suivantes :
(1) le dispositif de commande reçoit une première correspondance, c'est-à-dire un message de protocole Ethernet industriel PROFINET, transmise par le dispositif de station maître, et juge si le message est un message de diffusion ;
(2) lorsque le dispositif de commande reçoit un type de message du message diffusé, le dispositif de commande diffuse le message à tous les ports de commutation qui sont actuellement dans l'état UP ;
(3) le dispositif de commande reçoit des informations en ligne de dispositif ayant fait l'objet d'une réponse par un dispositif de station asservi via des commutateurs ; le dispositif de commande génère des informations de configuration de logique de communication de couche MAC correspondantes en fonction des informations en ligne de dispositif, et délivre les informations vers les commutateurs sur un trajet de communication via une interface vers le sud ;
(4) le dispositif de commande reçoit le message de protocole Ethernet industriel PROFINET transmis par la station maître, génère les informations de configuration de logique de communication de couche de réseau correspondantes en fonction des informations d'adresse IP dans le message, et envoie les informations aux commutateurs de réseau sur le trajet de communication à travers l'interface vers le sud.

4. Procédé d'accès du protocole PROFINET dans le SDN industriel selon la revendication 3, **caractérisé en ce que** le message de protocole Ethernet industriel PROFINET est un message d'adressage ARP.

5. Procédé d'accès du protocole PROFINET dans le SDN industriel selon la revendication 3, **caractérisé en ce que** les informations en ligne de dispositif comprennent : un port de source de message, une adresse MAC de source et des informations d'adresse MAC de destination.

6. Procédé d'accès du protocole PROFINET dans le SDN industriel selon la revendication 3, **caractérisé en ce que** les informations de configuration de logique comprennent :
une adresse IP de source est le dispositif de station maître ou de station asservie, et une adresse IP de destination est le dispositif de station asservie ou de station maître.

7. Procédé d'accès du protocole PROFINET dans le SDN industriel selon la revendication 3, **caractérisé en ce que** les informations d'adresse IP comprennent un port de source, une adresse IP de source et des informations d'adresse IP de destination.

8. Procédé d'accès du protocole PROFINET dans le SDN industriel selon la revendication 3, **caractérisé en ce qu'**un flux de traitement de commutation pour une mise en réseau des dispositifs de station maître et de station asservie de protocole Ethernet industriel est le suivant :
(1) après avoir reçu un message de réussite de configuration, le dispositif de station maître initie un adressage de couche de réseau ARP et une résolution d'adresse pour tous les dispositifs de station asservie dans une plage de configuration ; le message d'adressage ARP dans les commutateurs est téléchargé vers le dispositif de commande ; et le dispositif de commande diffuse le message d'adressage ARP ;
(2) les dispositifs de station asservie répondent le message d'adressage ARP au dispositif de commande, et le dispositif de commande configure des tables de flux de communication de logique de couche de réseau correspondantes du dispositif de station maître aux dispositifs de station asservie et des dispositifs de station asservie au dispositif de station maître dans tous les commutateurs sur le trajet de communication ;
(3) la station maître initie une communication de données à base de TCP/IP vers les dispositifs de station asservie en fonction du contenu d'un programme de configuration ;
(4) la station maître et les dispositifs de station asservie effectuent une communication par le biais d'une relation qui est définie par le programme de configuration.

9. Procédé d'accès du protocole PROFINET dans le SDN industriel selon la revendication 3, **caractérisé en ce que** le contenu de la correspondance de configuration de table de flux de communication de logique comprend : l'adresse IP de source est l'adresse IP des dispositifs de station maître et de station asservie ; l'adresse IP de destination est l'adresse IP des dispositifs de station maître et de station asservie ; et une action de mise en correspondance est un transfert de port de diffusion individuelle.
